Europäisches Patentamt

European Patent Office

Office européen des brevets

(11) Publication number: **0 341 820**
**A2**

## (12) EUROPEAN PATENT APPLICATION

(21) Application number: **89303367.0**

(22) Date of filing: **05.04.89**

(51) Int. Cl.⁴: **G11B 7/135 , G11B 7/09**

(30) Priority: **12.05.88 US 192953**

(43) Date of publication of application:
**15.11.89 Bulletin 89/46**

(84) Designated Contracting States:
**DE FR GB IT NL**

(71) Applicant: **DIGITAL EQUIPMENT CORPORATION**
**111 Powdermill Road**
**Maynard Massachusetts 01754-1418(US)**

(72) Inventor: **Lee, Neville K.S.**
**7, Larkspur Lane**
**Medfield Massachusetts 02052(US)**

(74) Representative: **Goodman, Christopher et al**
**Eric Potter & Clarkson 14 Oxford Street**
**Nottingham NG1 5BP(GB)**

(54) **A low mass optical head system.**

(57) Fine tracking and focusing actuators are removed from the optical head and implemented in a stationary beam control unit. Preferably, an optical relay in the control unit includes an optical component movable axially for remote focusing and perpendicularly for remote fine tracking. Only a folding mirror and objective lens remain on the moving head. Removing the fine tracking and focusing mechanisms from the head lowers the mass of the head and removes associated compliant components thus enabling higher accelerations, shorter settling times and overall faster access times.

FIG 1

# A LOW MASS OPTICAL HEAD SYSTEM

## Background of the Invention

This invention relates to systems for enhancing the seek performance of optical head positioning systems used in optical data storage devices.

One of the key problems confronting optical storage devices is the relatively slow track access time compared to Winchester magnetic disk drives. The reason why comparable performance has not been attained in optical drives lies chiefly in the mass of the optical head as well as the presence of compliant components required for focusing and/or fine track selection.

In optical storage systems, an energy beam is focused on a spot on the optical storage medium, typically a continuously spinning optical disk having a plurality of adjacent tracks. A particular track is selected by moving the head in the cross-track direction, generally radially with respect to the axis of disk rotation. Mechanical positioning of the head carriage typically results only in coarse trackpositioning, fine or individual track selection being left to manipulation of optical elements in the head. The focal point of the spot produced by the head must also be adjustable, not for track selection, but to follow differences in height of the surface of the disk in the axial direction, called axial run-out. Adjusting the focal point of the optical system is typically achieved by manipulating an optical element on the head.

Providing for fine tracking and focusing in this way introduces compliant elements, for example voice coil type actuators acting on spring biased optical elements, which are affected by acceleration of the head during the coarse positioning maneuver. Thus, these functional elements on the head not only contribute to the mass of the head thereby directly affecting the acceleration but also limit the maximum acceleration by introducing compliant components which reduce the rigidity of the system and, in particular, its ability to recover from rapid acceleration and deceleration, adding to the settling time, which in turn increases the average access time.

Recently, split head designs have been adopted in which the laser and detector systems are removed from the coarse positioner and placed on a remote stationary platform. The coarse head positioner is left essentially with only the focusing lens, focusing actuator and fine tracking actuator. While reducing the coarse positioner mass, the average access times of conventional split head designs are still far above those attainable with Winchester magnetic disk drives.

## Summary of the Invention

One general aspect of the invention is accomplishing fine track selection remotely by shifting the beam itself before it reaches the head so as to shift the focused spot relative to the head in the cross-track direction. Preferably, the remote fine tracking system is located in a beam control unit having a fixed location. The fine tracking system includes means for changing the local angle of incidence of the beam along the optical path from the beam control unit to the focusing element in the head in order to shift the focused spot laterally. In the preferred embodiment, the fine tracking system includes an optical relay with an optical component movable in a direction to cause a corresponding cross-track shift in the focused spot.

According to another general aspect of the invention, a remote focusing system is located in the beam control unit to control the axial position of the focused spot to follow the axial run-out of the data storage medium to keep the spot focused effectively on the storage medium. In a preferred embodiment, the focusing system includes means for adjusting the degree of local convergence or divergence of the energy beam along the optical path from the beam control unit to the head to direct the focused spot of the projected beam to a desired axial location. The preferred embodiment employs an optical relay system in the beam control unit having an optical component movable in a direction corresponding to axial displacement of the focused spot.

A further general aspect of the present invention combines remote fine tracking and remote focusing in the same drive system by locating these functional components in a beam control unit having a fixed location. In the preferred embodiment, the fine tracking and focusing systems comprise a common optical component movable axially for remote focusing and perpendicularly for remote fine tracking.

Removal of the fine tracking and focusing actuators from the optical head substantially reduces the mass of the coarse positioner assembly thereby allowing the coarse actuator to move faster. This system also removes the compliant components associated with fine tracking and focusing, which improves the settling time. These two factors dramatically improve the average access time for the drive. In the typical design, only a folding mirror and objective lens remain on the moving head, while mass constraints on the fine tracking and focusing mechanisms are eased by relocating them to a stationary platform.

## Brief Description of the Drawings

The drawings are briefly described as follows:

Fig. 1 is a schematic and block diagram of a preferred embodiment of the present invention;

Fig. 2 is a schematic representation of the optics of the fine tracking system according to the invention; and

Fig. 3 is a schematic representation of the optics of the focusing system according to the invention

## Detailed Description

### Structure

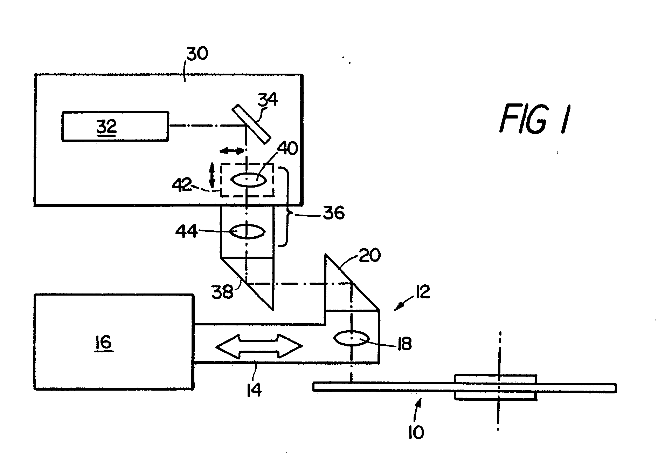

As shown in Fig. 1, digital data stored on an optical disk 10, which may be in a CD-ROM, write once read many (WORM) or magneto optical disk, or any other type of optical storage medium, is accessed by means of a movable optical head 12. Head 12 includes a carriage 14 which is positioned radially in the case of a linear actuator by means of coarse tracking actuator 16. The carriage 14 supports a focusing element in the form of an objective lens 18 in optical alignment with a 45° reflector 20. The nominal optical axis of reflector 20 and lens 18 is approximately parallel to the axis of rotation of the disk 10 as shown. A beam of energy, typically a collimated laser beam, is focused by lens 18 onto a spot on the recording surface of the disk 10. Data storage disk 10 includes a plurality of closely adjacent tracks. The excursion or stroke of the carriage 14 is sufficient to move the focused spot produced by the head 12 over all of the tracks on the disk 10. The coarse positioner 16, while capable of maneuvering the head 12 to the vicinity of the desired track, is not employed to achieve fine or individual track selection.

The energy beam is supplied to the optical head by means of a stationary optical assembly 30 including an energy beam source and detecting system 32 (e.g., including a laser and a collimator), a 45° reflector 34, an optical relay system 36 and, if necessary, an additional 45° reflector 38.

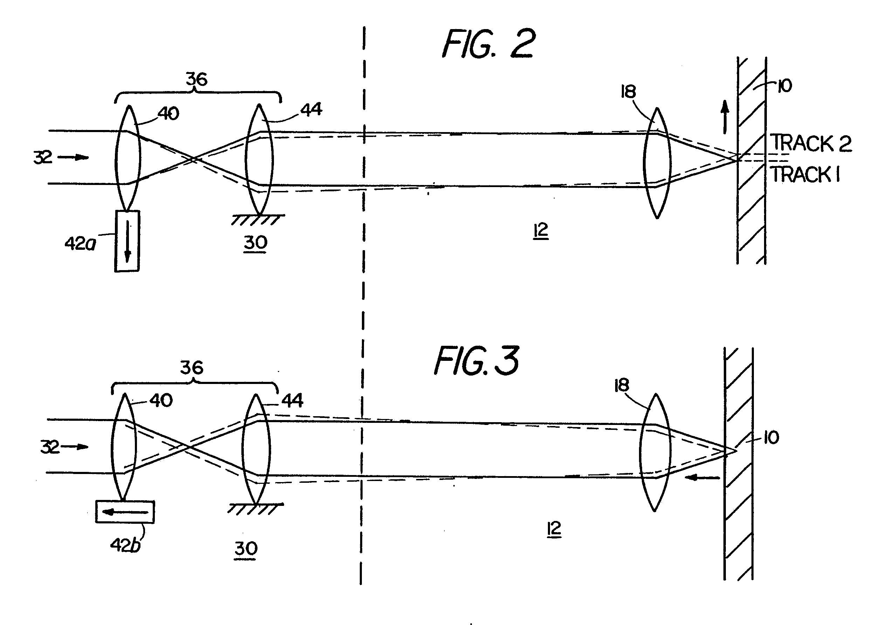

Optical relay system 36 includes a movable lens 40 adjustable both tranversely and axially by means of two-dimensional actuator 42, and a stationary lens 44. While movable within stationary unit 30, lens 40 is remote from and mechanically independent of head 12. As shown in Fig. 2, movable lens 40 is nominally optically aligned with the collimated beam from unit 32. In the illustrative embodiment the focal point of lens 40 is approximately midway between lenses 40 and 44. The focal length and optical axis of lens 40 are suitably matched and aligned with lens 44 such that, assuming a collimated input to lens 40 from unit 32, the output of lens 44 is also substantially collimated. Thus, in combination lenses 40 and 44 comprise an inverting optical relay 36.

### Operation

After the head 12 has been moved to the vicinity of the desired track by coarse tracking actuator 16, the specific track sought is accessed by moving lens 40 transversely (i.e., perpendicularly to the optical axis) by means of fine tracking actuator 42a. As indicated in Fig. 2, lateral displacement of the lens 40 correspondingly alters the angle of incidence of the beam traversing the optical path to the objective lens 18. The skewed angle of incidence shifts the focused spot laterally to select a neighboring track. The shift in the focused spot is in the opposite direction from the displacement of the lens 40 because of the inverting effect of the relay 36. Furthermore, the fine tracking system of the invention, if desired can achieve a multiplying optical effect so that a movement of the lens 40 results in a relatively greater or smaller movement of the focused spot projected onto the medium 10. The excursion of the movable lens 40 is designed to cover a range of tracks, for example, about ±20 tracks without changing the location of the head 12.

Adjusting the focused spot from objective lens 18 allows the optical system to accommodate axial run-out of disk 10. Focusing is controlled by axial adjustment of the same movable lens 40 in the stationary unit 30. As shown in Fig. 3, the relocation of the focused spot from objective lens 18 is in the same direction as the displacement of movable lens 40 by means of the focus actuator 42b in the stationary unit 30. The remote focus system changes the degree of local convergence or divergence of the beam along the optical path to the objective lens as shown in Fig. 3. The focusing system of the invention, if desired can achieve a multiplying optical effect so that a movement of the lens 40 results in a relatively greater or smaller movement of the focused spot projected onto the medium 10. Actuators 42a and 42b may be implemented by means of orthogonal voice coils or by other independent or combined mechanisms.

Many variations and alternative implementations of the foregoing system may be achieved without departing from the basic principles of the invention. For example, although converging singlet lenses 18, 40, and 44 are shown in the drawings, other equivalent optical elements may be substituted. In addition, the system is equally applicable to rotary as well as linear actuators. The term energy beam used herein means any form of directed energy including but not restricted to electromagnetic radiation, for example, infrared and visible laser outputs, and electron beams. The disclosed system is designed for use with a removable or non-removable optical data storage disk, preferably a magneto optical disk, but may also be applicable to other optical data storage media. The invention is also usable in conjunction with the autofocusing invention disclosed in the cross-referenced co-pending application. Thus, it is not a requirement that objective lens 18 be fixed in relation to the carriage 14 or reflector 20. However, if the autofocusing technique disclosed in the co-pending referenced application is employed, the focus actuation indicated in Fig. 3 may be partially or completely redundant. Alternatively, the autofocus technique disclosed in the co-pending application can be used in conjunction with the remote focusing technique indicated in Fig. 3 of the present application in the same device.

Remote fine tracking and focusing from a stationary platform substantially reduces the mass of the head thereby allowing the coarse actuator 16 to move the positioner head 12 more quickly than in prior devices. In addition, the invention eliminates from the head 12 moving parts and compliant components that cause vibrations in prior art systems. The removal of these components therefore reduces the settling time of the coarse positioning system. These two factors combine in the system according to the invention to greatly enhance the average access time of the optical drive. Moreover, mass and stability constraints on the design of the fine tracking and focusing mechanics are significantly reduced thus offering potential cost savings and increased accuracy.

**Claims**

1. An optical data storage drive system, comprising
a data storage medium having a plurality of adjacent tracks capable of storing optically accessible data,
a movable track selection head carrying a focusing element in proximity with said medium,
a beam control unit having a fixed location for controlling and transmitting an energy beam to said focusing element, said focusing element concentrating said beam on a focused spot on said medium,
a head actuator for moving the head in a cross track direction for coarse track selection without changing the location of said beam control unit, and
a remote fine tracking system located in said beam control unit for shifting said beam to effect fine track selection by correspondingly shifting the focused spot relative to said head in the cross track direction.

2. The system of claim 1, wherein said beam control unit is stationary.

3. The system of claim 1, wherein said fine tracking system includes means for changing the local angle of incidence of said beam along the optical path from said beam control unit to said focusing element in said head to shift the focused spot laterally.

4. The system of claim 1, wherein said fine tracking system includes a movable optical element and a fine tracking actuator for moving said optical element in a direction to achieve cross track displacement of said focused spot.

5. The system of claim 1, wherein said fine tracking system includes an optical relay including an optical element movable in a direction to cause a corresponding cross track shift in the focused spot.

6. An optical data storage drive system, comprising
a data storage medium having a plurality of adjacent tracks capable of storing optically accessible data,
a movable track selection head carrying a focusing element in proximity with the medium,
a beam control unit having a fixed location for controlling and transmitting a beam to said focusing element, said focusing element concentrating said beam on a focused spot on said medium,
a head actuator for moving the head in a cross track direction for coarse track selection without changing the location of said beam control unit, and
a remote focusing system located in said beam control unit for moving the focused spot axially to keep the spot focused effectively on said medium.

7. The system of claim 6, wherein said beam control unit is stationary.

8. The system of claim 6, wherein said focusing system includes means for adjusting the degree of local convergence or divergence of the energy beam along the optical path from the beam control unit to the movable head to direct the focused spot of the projected beam to a desired axial location.

9. The system of claim 6, wherein said focusing system includes a movable optical element located in said beam control unit.

10. The system of claim 6, wherein said focusing system includes an optical relay system including a movable optical element and an actuator for moving the optical element in a direction corresponding to axial displacement of the focused spot.

11. An optical data storage drive system, comprising

a data storage medium having a plurality of adjacent tracks capable of storing optically accessible data,

a movable track selection head carrying a focusing element in proximity with the medium,

a beam control unit having a fixed location for controlling and transmitting a beam to said focusing element, said focusing element concentrating said beam on a focused spot on the medium,

a head actuator for moving the head in a cross-track direction for coarse track selection without changing the location of said beam control unit,

a remote fine tracking system located in said beam control unit for shifting said beam to effect fine track selection by correspondingly shifting the focused spot relative to said head in the cross-track direction, and

a remote focusing system located in said beam control unit for axially shifting the focused spot.

12. The system of claim 11, wherein said beam control unit is stationary.

13. The system of claim 11, wherein said fine tracking system includes means for changing the local angle of incidence of said beam along the optical path from said beam control unit to said focusing element in said head to shift the focused spot laterally and said focusing system includes means for adjusting the degree of local convergence or divergence of the energy beam along the optical path from the beam control unit to the movable head to direct the focused spot of the projected beam to a desired axial location.

14. The system of claim 11, wherein said fine tracking and focusing systems comprise a common movable optical element.

15. The system of claim 14, further comprising a fixed optical element in said beam control unit coupled with said movable optical element to form an optical relay.

16. The system of claim 14, further comprising means for moving said movable optical element axially for remote focusing and perpendicularly for remote fine tracking.

*FIG 1*

FIG. 2

FIG. 3